# EUROPÄISCHE PATENTSCHRIFT

(11) **EP 1 088 998 B1**
(45) Veröffentlichungstag und Bekanntmachung des Hinweises auf die Patenterteilung: **06.06.2007**
(21) Anmeldenummer: 00810857.3
(22) Anmeldetag: 20.09.2000
(51) Int. Cl.: F16B 7/14, F16B 21/18

(54) **Schnellanbindesystem für Gewindestangen**
Quick fastener for a threaded shaft
Système d'attache rapide pour une tige filetée

(30) Priorität: 29.09.1999 DE 19946578
(43) Veröffentlichungstag der Anmeldung: 04.04.2001
(73) Patentinhaber: HILTI Aktiengesellschaft, 9494 Schaan (LI)
(72) Erfinder: Blessing, Matthias, 6820 Frastanz (AT); Birnbaum, Ulrich, 86916 Kaufering (DE)
(74) Vertreter: Wildi, Roland

(56) Entgegenhaltungen:
- WO-A-98/20261
- US-A- 3 314 696
- US-A- 5 098 241
- US-A- 5 161 838

## Beschreibung

Die Erfindung betrifft ein Schnellanbindesystem für mit einem Aussengewinde versehene Bolzen bzw. Gewindestangen gemäss dem Oberbegriff des Patentanspruchs 1.

Eine der am häufigsten eingesetzten Verbindungstechniken von zwei oder mehreren Teilen stellt die Schraubverbindung dar. Dazu wird üblicherweise ein mit einem Aussengewinde versehener Schraubbolzen mit einer Mutter verbunden, an der ein korrespondierendes Innengewinde ausgebildet ist. Die zu verbindenden Teile können mit dem Schraubbolzen oder der Mutter verbunden sein. Oft bildet der Schraubbolzen auch einen Bestandteil eines der Teile. Der zweite Teil ist dann meist mit einer Bohrung versehen, durch die der Schraubbolzen gesteckt wird. Danach wird die Mutter auf das Aussengewinde des Schraubbolzens aufgeschraubt. Es kann auch die Mutter als Bestandteil eines der Teile vorliegen. Dann wird der Schraubbolzen in die Mutter eingedreht, der beispielsweise durch eine Bohrung im zweiten Teil gesteckt ist. Der Schraubbolzen kann beispielsweise auch eine Gewindestange sein, die mit einer Halterung für Rohre verbunden ist. Die Mutter kann bereits in einer Decke, in einer Wand oder einem Bauteil angeordnet sein und dient zur Abhängung oder Fixierung der Rohrschelle an der Decke, der Wand oder dem Bauteil.

Nachteilig an bekannten Schraubverbindungen sind die im allgemeinen langen Schraubstrecken, die bis zur geforderten festen Verbindung zwischen dem Schraubbolzen bzw. der Gewindestange und der Mutter durch umständliches Schrauben zu überwinden sind. Damit die Mutter einfach und zuverlässig auf das Aussengewinde des Schraubbolzens bzw. der Gewindestange aufschraubbar ist, muss der Gewindeeinlauf frei von Beschädigungen sein. Diese können beispielsweise entstehen, wenn die Gewindestange auf die geforderte Länge abgeschnitten wird. Damit der Gewindeeinlauf wieder gängig wird, muss die Gewindestange oftmals umständlich nachgearbeitet werden. Ein weiterer Nachteil der bekannten Schraubverbindungen besteht in dem Umstand, dass nur gleichartige Gewindepartner miteinander verbunden werden können. Aus dem Stand der Technik sind zwar vereinzelte Lösungen bekannt, welche als Schnellanbindesysteme aufgefasst werden können. Diese erfüllen jedoch meist keine Brandschutzverordnungen und scheitern überdies vielfach hinsichtlich der geforderten Lastwerte. Beispielsweise sind aus dem Sanitärbereich Kunststoffmuttern bekannt, die in einem gekippten Zustand auf eine Gewindestange aufschiebbar und nach dem Zurückkippen festschraubbar sind. Derartige Kunststoffmuttern sind meist nur umständlich handzuhaben und wegen ihrer Brennbarkeit für Abhängungen oder ähnliche sicherheitsrelevante Befestigungen nicht einsetzbar. Muttern aus feuerbeständigen Materialien, wie beispielsweise Aluminium oder Blech besitzen meist keine Schnellanbindemöglichkeit und bestehen vielfach nur aus einem dünnen Material, das die geforderten Lastwerte nicht erreicht.

Aus der US 5,098,241 A ist ein Schnellanbindesystem für einen mit einem Aussengewinde als Aussenprofilierung versehenen Bolzen bekannt, das ein Aufnahmeteil für den Bolzen mit einer sich abschnittsweise in Richtung ihrer Einsteckmündung verjüngenden Bohrung aufweist. In der Bohrung ist ein von einem radial elastisch aufweitbaren Ringkörper gebildetes Verriegelungselement angeordnet, das formschlüssig in die Aussenprofilierung eingreift. Der Ringkörper ist in der Bohrung in Einsteckrichtung im wesentlichen unverschieblich gehalten und springt im Halterungsbereich gegenüber der Innenwandung der Bohrung vor, wobei die lichte Weite des elastischen Ringkörpers kleiner ist als der Durchmesser der Bohrung an ihrer Einsteckmündung. Der Ringkörper weist in Umfangsrichtung eine Trennstelle auf und besteht aus einem Federstahl.

Aufgabe der vorliegenden Erfindung ist es daher, ein Schnellanbindesystem für mit einem Aussengewinde versehene Bolzen bzw. Gewindestangen zu schaffen, welche die Nachteile der Lösungen des Stands der Technik beseitigt. Die Schnellanbindung soll schnell, einfach und ohne langwierige Schraubvorgänge oder grossen Kraftaufwand durchführbar sein. Dabei sollen die Anforderungen aus dem Brandschutz und hinsichtlich der erzielbaren Lastwerte erfüllbar sein. Die Schnellanbindung soll bei Bedarf einfach wieder lösbar sein und ein wiederholtes Verbinden und Lösen ermöglichen. Ein Nacharbeiten von Gewindestangen, deren Gewindeeinlauf beispielsweise durch einen Sägevorgang beschädigt ist, soll vermieden werden können, und die Schnellanbindung dennoch einfach durchführbar sein. Die Schnellanbindung soll auch bei hinsichtlich des Gewindes unterschiedlich ausgebildeten Partnern durchführbar sein.

Die Lösung dieser Aufgaben besteht in einem Schnellanbindesystem für mit einem Aussengewinde versehene Bolzen bzw. Gewindestangen, welche die im kennzeichnenden Abschnitt angeführten Merkmale aufweist. Bevorzugte Ausführungsvarianten bzw. vorteilhafte Weiterbildungen der Erfindung sind jeweils Gegenstand der abhängigen Patentansprüche. Das erfindungsgemässe Schnellanbindesystem für mit Aussenprofilierungen versehene Bolzen umfasst ein Aufnahmeteil für den Bolzen, das mit einer Bohrung versehen ist, in der wenigstens ein Verriegelungselement angeordnet ist, das formschlüssig in die Aussenprofilierungen eingreift. Die Bohrung im Aufnahmeteil verjüngt sich wenigstens abschnittsweise in Richtung ihrer Einsteckmündung. Das wenigstens eine Verriegelungselement ist von einem radial elastisch aufweitbaren Ringkörper gebildet, der in der Bohrung in Einsteckrichtung unverschieblich gehalten ist und im Hal-terungsbereich gegenüber der Innenwandung der Bohrung vorspringt. Die lichte Weite des elastischen Ringkörpers ist kleiner als der Durchmesser der Bohrung an ihrer Einsteckmündung.

Der Ringkörper weist in Umfangsrichtung eine Trennstelle auf und besteht aus einem Federstahl. Der Ringkörper ist Teil eines einstückigen Federbügels, der zwei paarweise parallel zueinander verlaufende, einander diametral gegenüberliegende, axial abragende Bügel aufweist, deren freie Enden hakenförmig nach aussen umgebogen sind und zur axialen Abstützung des Ringkörpers am Aufnahmeteil ausgebildet sind.

Indem der Ringkörper gesamthaft aus einem Federstahl besteht, ist die elastische radiale Aufweitbarkeit und die radiale Komprimierbarkeit in sehr einfacher Art gewährleistet.

Der Ringkörper ist ein Teil eines einstückigen Federbügels, der zwei paarweise parallel zueinander verlaufende, einander diametral gegenüberliegende, axial abragende Bügel aufweist. Die freien Enden der Bügelpaare sind hakenförmig nach aussen umgebogen und dienen zur axialen Abstützung des Ringkörpers am Aufnahmeteil. Der Federbügel ist aus einem Stück Federdraht gebogen und wird beispielsweise von der Einsteckmündung her in das Aufnahmeteil eingehängt, wobei es sich über die umgebogenen Haken am Aufnahmeteil abstützt. Die radiale Komprimierbarkeit des Ringkörpers erleichtert das Einschieben des Federbügels, bis es sich im erweiterten Bohrungsbereich wieder auf seinen Normaldurchmesser entspannt. Ein Herausfallen des Federbügels ist durch die zur Einsteckmündung konisch verjüngte Bohrung verhindert.

Die axiale Festlegung eines mit einer Aussenprofilierung versehenen Bolzens erfolgt sehr einfach und schnell durch blosses Einschieben in die Bohrung des Aufnahmeteils. Ein langwieriges Einschrauben des Bolzens entfällt. Das vorlaufende Ende des Bolzens weitet den Ringkörper, der gegen ein Verschieben in Einsteckrichtung gesichert ist, radial auf. Durch seine elastische Ausbildung verrastet der Ringkörper in der Aussenprofilierung formschlüssig. Bei Zugbelastung der Verbindung wird der Ringkörper geringfügig entlang der sich verjüngenden Innenflächen der Bohrung verschoben. Dabei wird er radial zusammengepresst, und die formschlüssige Verbindung zwischen dem Ringkörper und dem Bolzen wird durch eine kraftschlüssige Verbindung überlagert und verstärkt. Je nach Ausbildung der Aussenprofilierung des Bolzens ist ein einfaches Lösen der formschlüssigen Verbindung möglich. Im Fall eines Aussengewindes kann der Bolzen einfach herausgeschraubt werden. Die Höhenverstellbarkeit ist einfach zu bewerkstelligen, indem der Bolzen mehr oder weniger weit eingeschoben wird. Eine Nachbearbeitung, beispielsweise ein Entgraten, eines beispielsweise durch Abschneiden beschädigten Gewindeeinlaufes kann entfallen, da die Festlegung des Bolzens nicht durch zusammenwirkende Gewinde erfolgt, sondern, unabhängig vom Zustand des Gewindeeinlaufs, allein durch ein axiales Einschieben des Bolzens in das Aufnahmeteil. Durch die erfindungsgemässe Ausbildung des Aufnahmeteils ist es auch nicht mehr erforderlich, dass die an der Verbindung beteiligten Partner gleichartig ausgebildete Verbindungselemente aufweisen. Der Schnellanbindemechanismus funktioniert auch mit voneinander verschiedenen Arten von Gewinden oder dergleichen Profilierungen. Der Ringkörper verrastet formschlüssig mit nahezu jeder Art von Profilierung, die etwa ringförmig oder schraubenlinienförmig umlaufende Vertiefungen in der Mantelfläche des Bolzens aufweist.

Zur Erleichterung der elastischen, radialen Aufweitung und um bei Zugbelastung eine einfache radiale Kompression des Ringkörpers zu ermöglichen, weist der Ringkörper in Umfangsrichtung eine Trennstelle auf. Der Ringkörper ist in diesem Fall im wesentlichen in der Art eines elastischen Sprengrings ausgebildet.

Die axiale Festlegung des Ringkörpers gegen eine Verschiebung beim Einschieben des Bolzens in Einsteckrichtung erfolgt mit Vorteil durch eine in der Bohrung ringförmig umlaufende Schulter, an der sich der Ringkörper abstützt. Die ringförmig umlaufende Schulter ist auch fertigungstechnisch sehr einfach herstellbar.

Indem das im Bereich der Trennstelle des Ringkörpers abragende Bügelpaar gekreuzt angeordnet ist, bilden die beiden Bügel eine Handhabe zur radialen Aufweitung des Ringkörpers. Dadurch ist die formschlüssige Verbindung zwischen dem Bolzen und dem Aufnahmeteil bei Bedarf sehr einfach manuell wieder lösbar.

Für eine erleichterte Höhenverstellbarkeit des eingeschobenen Bolzens und für eine lagegenaue Positionierung eines mit dem Bolzen verbundenen Bauteils ist der Ringkörper im wesentlichen drehfest in der Bohrung gehalten.

Besonders vorteilhaft erweist sich die erfindungsgemässe Schnellanbindung in Verbindung mit Gewindestangen, bei denen die Aussenprofilierung ein Aussengewinde ist. Dabei ist es unerheblich, ob es sich bei dem Aussengewinde um ein metrisches, ein Whitworth oder eine andere Art von Gewinde handelt. Mit Gewindestangen ist die Höheneinstellung besonders einfach durchzuführen. Nach der Grobpositionierung durch Einstecken der Gewindestange in das Aufnahmeteil wird diese zur Feinjustierung der Höhe bei Bedarf entweder weiter hineingedreht oder ein Stück weit wieder herausgedreht. Die Gewindestange kann auch sehr einfach durch Herausschrauben wieder vollständig entfernt werden.

Die Bohrung im Aufnahmeteil kann beispielsweise als Sacklochbohrung ausgebildet sein. Hinsichtlich der Höhenverstellbarkeit erweist es sich von Vorteil, wenn die Bohrung als eine das Aufnahmeteil axial durchsetzende Durchgangsbohrung ausgebildet ist.

Zur Erhöhung der erzielbaren Lastwerte können in einer Variante der Erfindung mehrere Verriegelungselemente axial hintereinander in der Bohrung angeordnet sein. Dabei können die Verriegelungselemente hintereinander an einem sich in Richtung der Einsteckmündung verjüngenden Bohrungsabschnitt vorgesehen sein. Dies bedingt, dass die Verriegelungselemente mit voneinander verschiedenen Querschnitten ausgebildet sind. Vorzugsweise ist daher jedem Verriegelungselement ein separater Bohrungsabschnitt zugeordnet, der in Richtung der Einsteckmündung wenigstens bereichsweise verjüngt ausgebildet ist. Dabei können die Verriegelungselemente und die Bohrungsabschnitte identisch ausgebildet sein, damit die Verriegelungselemente unter Zugbelastung radial zusammengepresst werden und dadurch die formschlüssige Verbindung verstärkt wird.

Im folgenden wird die Erfindung unter Bezugnahme auf in den Fig. dargestellte Ausführungsbeispiele näher erläutert. Es zeigen in nicht massstabsgetreuer, schematischer Darstellung:
- Fig. 1: eine Schnittdarstellung eines Schnellanbindesystems;
- Fig. 2: eine Schnittdarstellung einer zweiten Variante eines Schnellanbindesystems;
- Fig. 3 und Fig. 4: Detaildarstellungen einer dritten Variante eines Schnellanbindesystems;
- Fig. 5: eine perspektivische Ansicht eines ersten Ausführungsbeispiels der Erfindung;
- Fig. 6: eine Variante eines Verriegelungselements für das Ausführungsbeispiel gemäss Fig. 5; und
- Fig. 7: ein weiteres Ausführungsbeispiel des Schnellanbindesystems in teilweise geschnittener Darstellung.

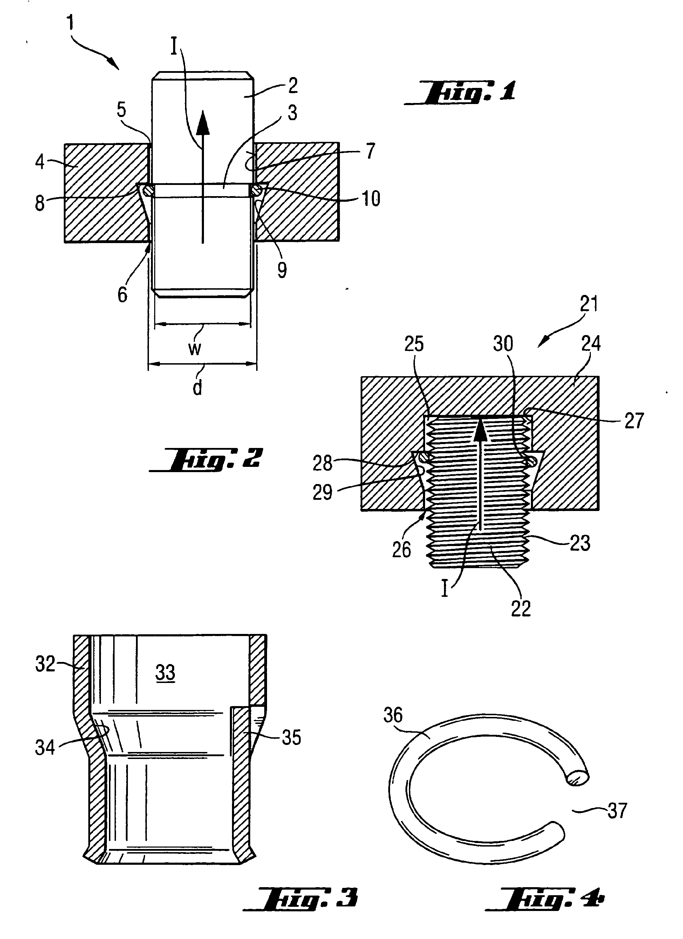

Das in Fig. 1 dargestellte Schnellanbindesystem für mit einer Aussenprofilierung versehene Bolzen trägt gesamthaft das Bezugszeichen 1. Es umfasst ein Aufnahmeteil 4, das eine Durchgangsbohrung 5 aufweist, einen mit einer Aussenprofilierung 3 versehenen Bolzen 2 und ein in der Durchgangsbohrung 5 angeordnetes Verriegelungselement 10.

Das Aufnahmeteil 4 kann ein separates Bauteil sein und beispielsweise nach Art einer Mutter ausgebildet sein. Es kann auch als integraler Bestandteil eines Anschlussbauteils vorliegen oder beispielsweise bereits in einer Decke, einer Wand oder dergleichen vorgesehen sein. Der Bolzen 2 kann beispielsweise von einem Bauteil abragen oder mit Anschlusseinrichtungen für die Montage von weiteren Bauteilen, wie beispielsweise Rohrschellen oder dergleichen, ausgestattet sein. Die Aussenprofilierung 3 des Bolzens 2 ist beispielsweise als umlaufende Ringnut ausgebildet. Im dargestellten Abschnitt des Bolzens 2 ist nur eine einzelne Ringnut 3 angedeutet. Es versteht sich, dass entlang der Längserstreckung des Bolzens 2 mehrere Ringnuten hintereinander oder ein Gewinde angeordnet sein können. Die Durchgangsbohrung 5 weist einen Durchmesser d auf, der geringfügig grösser ist als der Aussendurchmesser des Bolzens 2. Das innerhalb der Durchgangsbohrung 5 angeordnete Verriegelungselement 10 ist als ein radial elastisch aufweitbarer Ringkörper ausgebildet. Der Ringkörper 10 ist in einem im Durchmesser erweiterten Bereich der Durchgangsbohrung 5 angeordnet. In Einsteckrichtung, die mit dem Pfeil I bezeichnet ist, stützt sich der Ringkörper 10 an einer Ringschulter 8 ab. Ausgehend von der Ringschulter 8 verjüngt sich der Aufnahmebereich 9 für den Ringkörper 10 etwa konisch in Richtung der Einsteckmündung 6 der Durchgangsbohrung 5. Der Ringkörper 10 ist derart bemessen, dass er gegenüber der Innenwandung 7 der Durchgangsbohrung 5 vorspringt. Dabei weist der Ringkörper 10 eine lichte Weite w auf, die kleiner ist als der Durchmesser d der Durchgangsbohrung 5 an der Einsteckmündung 6.

Beim Einstecken des Bolzens 2 in die Durchgangsbohrung 5 wird der Ringkörper 10 von dem vorlaufenden freien Ende des Bolzens 2 radial aufgeweitet und verriegelt infolge seiner Federkraft formschlüssig in der umlaufenden Ringnut 3 in der Aussenfläche des Bolzens 2. Die in der Durchgangsbohrung 5 vorgesehene Schulter 8 verhindert dabei ein Wegdrücken des Ringkörpers 10. Unter Zugbelastung wird der Ringkörper 10 geringfügig in Richtung der Einsteckmündung 6 bewegt. Dabei wird er durch den sich konisch verjüngenden Abschnitt 9 der Durchgangsbohrung 5 radial zusammengepresst. Dadurch wird die formschlüssige Halterung des Ringkörpers 10 in der Ringnut 3 des Bolzens 2 verstärkt. Zur Höhenverstellung des Bolzens 2 wird dieser einfach weiter in die Durchgangsbohrung 5 eingeschoben, bis der Verriegelungskörper 10 in einer der nächsten Ringnuten verriegelt.

Bei dem in Fig. 2 dargestellten zweiten Beispiel eines Schnellanbindesystems tragen analoge Elemente Bezugszeichen, die gegenüber den Bezugszeichen in Fig. 1 um 20 grösser sind. Zum Unterschied von dem in Fig. 1 dargestellten Beispiel weist das Aufnahmeteil 24 eine Sacklochbohrung 25 auf. Der Bolzen 22 besitzt eine Aussenprofilierung in Form eines Aussengewindes 23. Dabei kann es sich um ein metrisches Gewinde, um ein Whitworthgewinde oder um eine andere Gewindeart handeln. Der als Gewindestange vorliegende Bolzen 22 ist unabhängig von der Gewindeart sehr einfach und schnell, formschlüssig mit dem Aufnahmeteil 24 verbindbar. Eine Höhenverstellbarkeit besteht in einem mehr oder weniger weiten Einstecken der Gewindestange 22 oder in einem nachträglichen, weiteren Hineinschrauben in das Aufnahmeteil 24 oder in einem Herausschrauben derselben aus dem Aufnahmeteil 24. Die Gewindestange 22 lässt sich auf diese Weise auch sehr einfach wieder vollständig demontieren. Es besteht auch die Möglichkeit, den Bolzen 22 vollständig einzuschrauben und am Bohrungsgrund festzuziehen, um ein allfälliges Spiel aus der Verbindung zu nehmen.

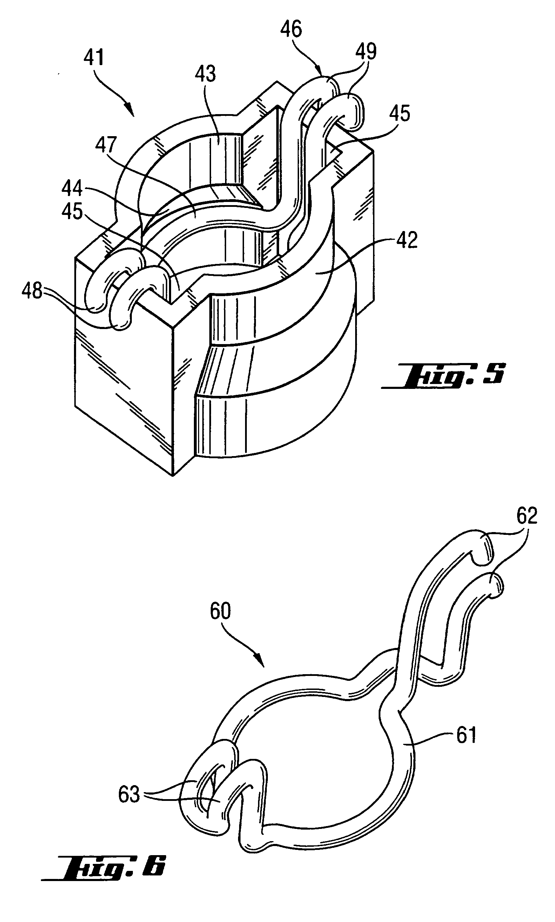

Fig. 3 und 4 zeigen zwei Detailansichten eines weiteren Beispiels eines Schnellanbindesystems. Das mit dem Bezugszeichen 32 versehene Aufnahmeteil besitzt wiederum eine Durchgangsbohrung 33 mit einem sich in Richtung der Einsteckmündung etwa konisch verjüngenden Abschnitt 34. Das Aufnahmeteil 32 ist in der Durchgangsbohrung 33 mit einer Verdrehsicherung 35 für das in Fig. 4 dargestellte Verriegelungsteil 36 ausgestattet. Die Verdrehsicherung 35 besteht aus einer, radial in die Durchgangsbohrung 33 ragenden, leistenförmigen Nase. Die Nase 35 ragt in eine Trennstelle 37 des als radial federbarer Ringkörper ausgebildeten Verriegelungsteils 36 und verhindert ein Verdrehen des Ringkörpers 36.

Fig. 5 zeigt ein Ausführungsbeispiel eines erfindungsgemässen Schnellanbindesystems, das gesamthaft mit dem Bezugszeichen 41 versehen ist. Aus Gründen der Übersichtlichkeit wurde in der perspektivischen Darstellung der mit Aussenprofilierungen, beispielsweise Ringnuten oder einem Gewinde, versehene Bolzen weggelassen. Das Aufnahmeteil trägt das Bezugszeichen 42 und ist mit einer Durchgangsbohrung 43 versehen. Die Durchgangsbohrung 43 besitzt einen erweiterten Abschnitt 44, der sich in Richtung der Einsteckmündung der Durchgangsbohrung 43 etwa konisch verjüngt. Die Durchgangsbohrung 43 ist mit zwei, einander gegenüberliegenden Erweiterungen 45 versehen, deren Funktion nachstehend noch erläutert wird. In der Erweiterung 44 der Durchgangsbohrung ist ein Verriegelungsteil 46 angeordnet, das die Form eines einstückigen, gebogenen Federdrahtbügels aufweist. Von einem im erweiterten Abschnitt 44 der Durchgangsbohrung 43 angeordneten Ringkörper 47 ragen an einander gegenüberliegenden Seiten jeweils zwei Drahtbügel 48, 49 ab. Ein Drahtbügelpaar 49 ist einstückig miteinander verbunden. Das gegenüberliegende Drahtbügelpaar 48 weist eine Trennstelle auf. An ihren vom Ringkörper 47 abgewandten Enden sind die Drahtbügel 48, 49 hakenförmig umgebogen. Im montierten Zustand werden die Drahtbügel 48, 49 von den Erweiterungen 45 des Aufnahmeteils 42 aufgenommen und mit den hakenförmig umgebogenen freien Enden der Bügel 48, 49 an der Oberseite des Aufnahmeteils 42 eingehängt. Die offene Bügelseite 48 des Federdrahtbügels 46 ermöglicht eine einfache Montage des Ringkörpers 47 in dem erweiterten Abschnitt 44 des Aufnahmeteils 42.

Beim Einstecken weitet eine Gewindestange oder dergleichen den Ringkörper 47 radial auf. Der Ringkörper 47 bildet eine formschlüssige Verbindung mit dem Aussengewinde bzw. mit ringnutartigen Aussenprofilierungen eines Bolzens. Zum Lösen der formschlüssigen Verbindung wird das offene Bügelpaar 48 beispielsweise mit der Klinge eines Schraubendrehers auseinandergepresst. Danach kann der Bolzen einfach wieder herausgezogen werden.

Fig. 6 zeigt eine Variante eines einstückig ausgebildeten Federdrahtbügels 60, der beispielsweise in ein Aufnahmeteil 42 gemäss Fig. 5 einhängbar ist. Der Federdrahtbügel 60 besitzt einen Ringkörper 61, von dem, einander gegenüberliegend, jeweils zwei Bügelpaare 62, 63 abragen, deren Enden hakenförmig umgebogen sind. Ein Bügelpaar 63 ist miteinander verbunden. Das gegenüberliegende, offene Bügelpaar 62 ist mit einander überkreuzenden Bügelarmen versehen. Durch das Überkreuzen bilden die Arme des Bügelpaars 62 eine Handhabe, die es dem Anwender erleichtert, den Ringkörper 61 aufzuweiten, falls ein formschlüssig gehaltener, mit Aussenprofilierungen versehener Bolzen wieder demontiert werden soll.

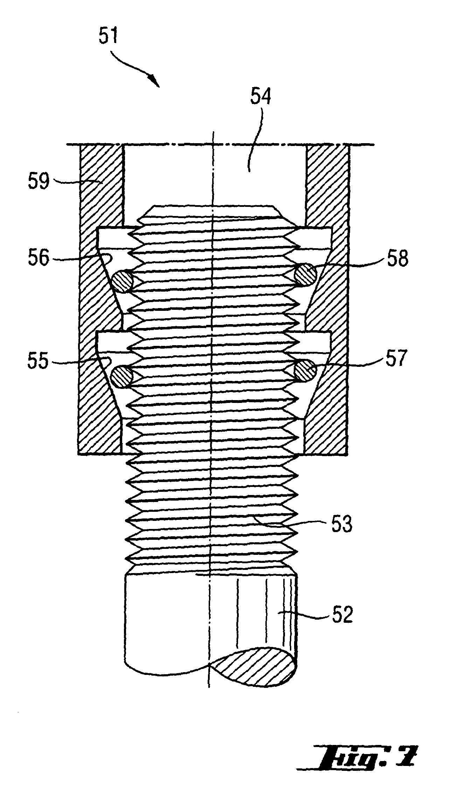

Zur Erzielung noch grösserer Auszugswerte ist das in Fig. 7 dargestellte Ausführungsbeispiel eines Schnellanbindesystems 51 mit zwei, in der Durchgangsbohrung 54 eines Anschlussteils 59 angeordneten Verriegelungselementen 57, 58 ausgestattet. Die als radial federbare Ringkörper ausgebildeten Verriegelungselemente 57, 58 sind jeweils in Erweiterungen 55, 56 der Durchgangsbohrung 54 angeordnet, die sich in Richtung der Einsteckmündung der Durchgangsbohrung 54 etwa konisch verjüngen. Ein beispielsweise mit einem Aussengewinde 53 versehener Bolzen 52 wird durch beide Ringkörper 57, 58 durchgesteckt. Die Ringkörper 57, 58 verrasten formschlüssig in den Windungen des Aussengewindes. Bei Zugbelastung laufen beide Verriegelungskörper auf die konischen Flächen der erweiterten Bereiche 55, 56 der Durchgangsbohrung 54 auf, und sie werden radial zusammengepresst. Dadurch sind noch höhere Lastwerte erzielbar.

## Patentansprüche

1. Schnellanbindesystem für mit Aussenprofilierungen (53) versehene Bolzen (52) mit einem Aufnahmeteil (42; 59) für den Bolzen (52), das mit einer Bohrung (43; 54) versehen ist, in der wenigstens ein Verriegelungselement (46; 57, 58) angeordnet ist, das formschlüssig in die Aussenprofilierungen (53) eingreift, wobei die Bohrung (43; 54) im Aufnahmeteil (42; 59) sich wenigstens abschnittsweise (44; 55, 56) in Richtung ihrer Einsteckmündung verjüngt und das wenigstens eine Verriegelungselement (46; 57, 58) von einem radial elastisch aufweitbaren Ringkörper gebildet ist, der in der Bohrung (43; 54) in Einsteckrichtung (I) im wesentlichen unverschieblich gehalten ist und im Halterungsbereich gegenüber der Innenwandung der Bohrung (43; 54) vorspringt, wobei die lichte Weite (w) des elastischen Ringkörpers (46; 57, 58) kleiner ist als der Durchmesser (d) der Bohrung (43; 54) an ihrer Einsteckmündung und wobei der Ringkörper (46; 57; 58) in Umfangsrichtung eine Trennstelle aufweist, sowie aus einem Federstahl besteht, **dadurch gekennzeichnet, dass** der Ringkörper (46; 60) Teil eines einstückigen Federbügels ist, der zwei paarweise parallel zueinander verlaufende, einander diametral gegenüberliegende, axial abragende Bügel (48, 49; 62, 63) aufweist, deren freie Enden hakenförmig nach aussen umgebogen sind und zur axialen Abstützung des Ringkörpers (46, 60) am Aufnahmeteil (42) ausgebildet sind.

2. Schnellanbindesystem nach Anspruch 1, **dadurch gekennzeichnet, dass** sich der Ringkörper (10; 30; 57, 58) an einer in der Bohrung (5; 25; 54) ringförmig umlaufenden Schulter (8; 28) abstützt.

3. Schnellanbindesystem nach Anspruch 1 **dadurch gekennzeichnet, dass** das im Bereich der Trennstelle des Ringkörpers (61) abragende Bügelpaar (62) einander überkreuzt und als Handhabe zur radialen Aufweitung des Ringkörpers (61) ausgebildet ist.

4. Schnellanbindesystem nach einem der vorangehenden Ansprüche, **dadurch gekennzeichnet, dass** der Ringkörper (36; 47; 61) im wesentlichen drehfest in der Bohrung (33; 43) gehalten ist.

5. Schnellanbindesystem nach Anspruch 4, **dadurch gekennzeichnet, dass** die Aussenprofilierung des Bolzens (22; 52) ein Aussengewinde (23; 53) ist.

6. Schnellanbindesystem nach einem der vorangehenden Ansprüche, **dadurch gekennzeichnet, dass** die Bohrung (5; 33; 43; 54) eine das Aufnahmeteil (4; 32; 42; 59) durchsetzende Durchgangsbohrung ist.

7. Schnellanbindesystem nach einem der vorangehenden Ansprüche, **dadurch gekennzeichnet, dass** mehrere Verriegelungselemente (57, 58) axial hintereinander in der Bohrung (54) angeordnet sind und vorzugsweise jedem Verriegelungselement (57, 58) ein Bohrungsabschnitt (55, 56) zugeordnet ist, der in Richtung der Einsteckmündung wenigstens bereichsweise verjüngt ausgebildet ist.

## Claims

1. A quick fastener for bolts (52) provided with outer profilings (53) and with a receiving part (42; 59) for the bolt, which part is provided with a bore (43; 54) in which is arranged at least one interlocking element (46; 57, 58) which engages positively in the outer profilings (53), wherein the bore (43; 54) in the receiving part (42; 59) is constricted, at least in sections (44; 55, 56) in the direction of its insertion opening, and the at least one interlocking element (46; 57, 58) is formed by an annular element that can be widened elastically in the radial direction, which element is retained essentially fixedly in the bore (43; 54) in the direction of insertion (I) and projects from the inner wall of the bore (43; 54) in the support region, wherein the clear width (w) of the elastic annular element (46; 57, 58) is smaller than the diameter (d) of the bore (43; 54) at its insertion opening, and wherein the annular element (46; 57; 58) has a separating point ion the circumferential direction and consists of a spring steel, **characterised in that** the annular element (46; 60)( is part of an integral spring strap which exhibits two axially projecting straps (48, 49; 62, 63) running in pairs parallel with each other and diametrically opposed to one another, the free ends of which straps are bent outwards in the shape of a hook and are designed for axially supporting the annular element (46, 60) on the receiving part (42).

2. The quick fastener according to Claim 1, **characterised in that** the annular element (10; 30; 57, 58) is supported on a shoulder (8; 28) rotating annularly in the bore (5; 25; 54).

3. The quick fastener according to Claim 1, **characterised in that** the pair of straps (62) projecting in the region of the separation point of the annular element (61) intersect each other and are designed as a handle for the radial widening of the annular element (61).

4. The quick fastener according to one of the preceding claims, **characterised in that** the annular element (36; 47; 61) is retained essentially fixedly in the bore (33; 43).

5. The quick fastener according to Claim 4, **characterised in that** the outer profiling of the bolt (22; 52) is a male thread (23; 53).

6. The quick fastener according to one of the preceding claims, **characterised in that** the bore (5; 33; 43; 54) is a continuous bore through which the receiving part (4; 32; 42; 59) passes.

7. The quick fastener according to one of the preceding claims, **characterised in that** a plurality of interlocking elements (57, 57) are arranged axially behind one another in the bore (54) and **in that** a bore section (55, 56) is preferably assigned to each interlocking element (57, 58), which section is designed so that it is constricted, at least in certain regions, in the direction of the insertion opening.

## Revendications

1. Système d'attache rapide pour des goujons (52) munis de profilages extérieurs (53), comprenant pour le goujon (52) une partie réceptrice (42 ; 59) pourvue d'un trou (43 ; 54) dans lequel est disposé au moins un élément de verrouillage (46 ; 57 ; 58) qui s'engage par complémentarité de formes dans les profilages extérieurs (53), le trou (54) dans la partie réceptrice (42; 59) se rétrécissant au moins dans certaines portions (44; 55, 56) en direction de son orifice d'insertion, et l'élément de verrouillage au nombre d'au moins un (46; 57, 58) étant formé par un corps annulaire à déploiement élastique radial qui est maintenu dans le trou (43 ; 54) sensiblement sans possibilité de déplacement dans la direction d'insertion (I) et qui, dans la zone de retenue, fait saillie par rapport à la paroi intérieure du trou (43 ; 54), l'ouverture libre (w) du corps annulaire élastique (46 ; 57, 58) étant plus petite que le diamètre (d) du trou (43 ; 54) au niveau de l'orifice d'insertion de celui-ci, et le corps annulaire (46 ; 57 ; 58) comportant dans la direction circonférentielle un point de séparation et est réalisé en acier à ressort, **caractérisé en ce que** le corps annulaire (46 ; 60) fait partie d'un étrier élastique d'un seul tenant comportant deux étriers (48, 49 ; 62, 63) qui s'étendent par paires parallèlement l'un à l'autre, sont diamétralement opposés et font saillie axialement et dont les extrémités libres sont recourbées vers l'extérieur en forme de crochets et sont conformées pour donner au corps annulaire (46, 60) un appui axial sur la partie réceptrice (42) .

2. Système d'attache rapide selon la revendication 1, **caractérisé en ce que** le corps annulaire (10 ; 30 ; 57, 58) prend appui sur un épaulement périphérique annulaire (8 ; 28) ménagé dans le trou (5 ; 25 ; 54).

3. Système d'attache rapide selon la revendication 1, **caractérisé en ce que** les étriers appariés (62) qui dépassent dans la zone du point de séparation du corps annulaire (61) se croisent et sont conformés en moyen de manipulation pour le déploiement radial du corps annulaire (61).

4. Système d'attache rapide selon une des revendications précédentes, **caractérisé en ce que** le corps annulaire (36; 47; 61) est maintenu dans le trou (33; 43) de manière sensiblement solidaire en rotation.

5. Système d'attache rapide selon la revendication 4, **caractérisé en ce que** le profilage extérieur du goujon (22 ; 52) est un filetage extérieur (23 ; 53).

6. Système d'attache rapide selon une des revendications précédentes, **caractérisé en ce que** le trou (5; 33; 43; 54) est un trou débouchant qui traverse la partie réceptrice (4; 32; 42; 59).

7. Système d'attache rapide selon une des revendications précédentes, **caractérisé en ce que** plusieurs éléments de verrouillage (57, 58) sont disposés axialement les uns derrière les autres dans le trou (54) et, de préférence, une portion de trou (55, 56) rétrécie au moins par endroits en direction de l'orifice d'insertion est associée à chaque élément de verrouillage (57, 58).
